# FASCICULE DE BREVET EUROPEEN

(11) **EP 3 561 632 B1**
(45) Date de publication et mention de la délivrance du brevet: **31.03.2021**
(21) Numéro de dépôt: 19170442.8
(22) Date de dépôt: 21.04.2019
(51) Int. Cl.: G05D 16/16

(54) **DISPOSITIF FLUIDIQUE D'ALIMENTATION EN FLUIDE D'INTERET**
FLUIDISCHE VORRICHTUNG ZUR VERSORGUNG MIT EINEM GEWÜNSCHTEN FLUID
FLUIDIC DEVICE FOR SUPPLYING A FLUID OF INTEREST

(30) Priorité: 24.04.2018 FR 1853591
(43) Date de publication de la demande: 30.10.2019
(73) Titulaire: Commissariat à l'Énergie Atomique et aux Énergies Alternatives, 75015 Paris cedex (FR)
(72) Inventeur: FROIDUROT, Laurent, 38054 GRENOBLE CEDEX 09 (FR); SAUZEDDE, François, 38054 GRENOBLE CEDEX 09 (FR)
(74) Mandataire: INNOV-GROUP

(56) Documents cités:
- EP-A1- 2 602 523
- US-A- 5 427 350
- US-A1- 2007 166 577
- US-A1- 2009 053 567
- US-A1- 2010 068 580

## Description

### DOMAINE TECHNIQUE

Le domaine de l'invention est celui des dispositifs fluidiques comportant un détendeur et une vanne disposés en série sur une ligne fluidique. De tels dispositifs fluidiques permettent ainsi de recevoir le fluide d'intérêt à une pression amont et d'alimenter, c'est-à-dire de fournir, le fluide d'intérêt à une pression aval inférieure à la pression amont. L'invention trouve une application dans de nombreux domaines techniques, notamment dans celui des systèmes électrochimiques comportant une pile à combustible alimentée en un fluide d'intérêt, par exemple en hydrogène et/ou en oxygène, initialement stocké sous pression.

### ÉTAT DE LA TECHNIQUE ANTÉRIEURE

Dans de nombreux domaines techniques, il est nécessaire d'utiliser un dispositif fluidique d'alimentation adapté à recevoir un fluide d'intérêt à une pression amont et à fournir à la demande le fluide d'intérêt à une pression aval inférieure à la pression amont. Un tel dispositif d'alimentation comporte alors une ligne fluidique de circulation du fluide d'intérêt, sur laquelle sont disposés en série une vanne et un détendeur.

C'est le cas notamment des systèmes électrochimiques comportant une pile à combustible alimentée par exemple en un fluide d'intérêt stocké initialement sous pression. Un dispositif d'alimentation relie alors habituellement le réservoir sous pression et une entrée de la pile à combustible. A titre d'exemple, le réservoir peut stocker de l'hydrogène à une pression de plusieurs dizaines de bars et la pile à combustible peut nécessiter d'être alimentée en hydrogène à une pression égale à quelques bars environ. Un détendeur est alors nécessaire sur la ligne fluidique d'alimentation, ainsi qu'une vanne permettant d'autoriser ou de bloquer l'écoulement du fluide d'intérêt.

La commande en ouverture/fermeture de la vanne peut être classiquement effectuée de différentes manières. La vanne peut ainsi être à commande électrique, par exemple au moyen d'un solénoïde, voire à commande par pression, par exemple au moyen d'air comprimé.

Cependant, il existe un besoin de disposer d'un tel dispositif fluidique d'alimentation présentant un coût énergétique associé à la commande de la vanne qui soit réduit.

Plusieurs documents décrivent des dispositifs d'alimentation, par exemple en hydrogène, comportant une vanne d'arrêt, tels que par exemple les documents EP2602523A1, US2007/166577A1, US2009/053567A1, US2010/068580A1, et US5427350A.

### EXPOSÉ DE L'INVENTION

L'invention a pour objectif de remédier au moins en partie aux inconvénients de l'art antérieur, et plus particulièrement de proposer un dispositif fluidique d'alimentation en un fluide d'intérêt dont la commande de la vanne présente un coût énergétique réduit.

Pour cela, l'objet de l'invention est un dispositif fluidique d'alimentation en fluide d'intérêt, comprenant :
∘ une ligne fluidique de circulation du fluide d'intérêt, comportant une entrée destinée à recevoir le fluide d'intérêt à une pression amont Pᵢₙ ;
∘ un détendeur, disposé sur la ligne fluidique, adapté à diminuer la pression du fluide d'intérêt de la pression amont à une pression aval Pₒᵤₜ ;
∘ une vanne, disposée sur la ligne fluidique en amont ou aval du détendeur, comportant une tête de vanne adaptée à occuper une position d'ouverture de vanne et une position de fermeture de vanne.

Selon l'invention, la vanne est adaptée à être commandée en ouverture ou en fermeture par pression selon qu'une pression exercée sur la tête de vanne est sensiblement égale à la pression amont Pᵢₙ ou à la pression aval Pₒᵤₜ.

De plus, le dispositif fluidique comporte un distributeur :
- comportant un premier orifice relié à la ligne fluidique en amont du détendeur, un deuxième orifice relié à la ligne fluidique en aval du détendeur, et un troisième orifice dit de commande relié à la tête de vanne,
- adapté à commander l'ouverture ou la fermeture de la vanne, selon que l'orifice de commande est connecté au premier orifice ou au deuxième orifice.

Certains aspects préférés mais non limitatifs de ce dispositif fluidique d'alimentation sont les suivants.

Le distributeur peut être configuré de sorte que la vanne est fermée lorsque le fluide d'intérêt exerce sur la tête de vanne une pression dite de fermeture sensiblement égale à la pression du fluide d'intérêt dans la ligne fluidique en entrée de la vanne.

La vanne peut être disposée en aval du détendeur, et peut être adaptée à être ouverte lorsque le fluide d'intérêt exerce sur la tête de vanne une pression sensiblement égale à la pression amont Pᵢₙ, et à être fermée lorsque le fluide d'intérêt exerce sur la tête de vanne une pression sensiblement égale à la pression aval Pₒᵤₜ. Le distributeur peut alors présenter :
- une configuration d'ouverture de vanne dans laquelle l'orifice de commande est connecté au premier orifice, mettant ainsi la tête de vanne en communication avec le fluide d'intérêt à une pression sensiblement égale à la pression amont Pᵢₙ, et
- une configuration de fermeture de vanne dans laquelle l'orifice de commande est connecté au deuxième orifice, mettant ainsi la tête de vanne en communication avec le fluide d'intérêt à une pression sensiblement égale à la pression aval Pₒᵤₜ.

La vanne peut être disposée en amont du détendeur, et être adaptée à être ouverte lorsque le fluide d'intérêt exerce sur la tête de vanne une pression sensiblement égale à la pression aval Pₒᵤₜ, et à être fermée lorsque le fluide d'intérêt exerce sur la tête de vanne une pression sensiblement égale à la pression amont Pᵢₙ. Le distributeur peut alors présenter :
- une configuration d'ouverture de vanne dans laquelle l'orifice de commande est connecté au deuxième orifice, mettant ainsi la tête de vanne en communication avec le fluide d'intérêt à une pression sensiblement égale à la pression aval Pₒᵤₜ, et
- une configuration de fermeture de vanne dans laquelle l'orifice de commande est connecté au premier orifice, mettant ainsi la tête de vanne en communication avec le fluide d'intérêt à une pression sensiblement égale à la pression amont Pᵢₙ.

La vanne peut comporter une chambre intermédiaire, située entre la tête de vanne et un conduit interne communiquant avec la ligne fluidique, et traversée de manière étanche par une tige reliant la tête de vanne à un obturateur du conduit interne, la chambre intermédiaire étant mise à une pression sensiblement égale à la pression de fermeture.

La chambre intermédiaire peut être reliée à une partie de ladite ligne fluidique dans laquelle le fluide d'intérêt présente la pression de fermeture.

Le distributeur peut être à commande électrique.

L'invention porte également sur un système électrochimique, comprenant :
∘ un réservoir de stockage d'un fluide d'intérêt à une pression supérieure ou égale à la pression amont Pᵢₙ ;
∘ une pile à combustible, comportant au moins un collecteur d'entrée adapté à assurer l'écoulement du fluide d'intérêt dans la pile à combustible ;
∘ au moins un dispositif fluidique d'alimentation selon l'une quelconque des caractéristiques précédentes, reliant le réservoir au collecteur d'entrée, le fluide d'intérêt étant de l'hydrogène ou de l'oxygène.

Le système électrochimique peut comporter au moins une vanne supplémentaire :
- comportant une tête de vanne adaptée à occuper une position d'ouverture de vanne et une position de fermeture de vanne, et adaptée à être commandée en ouverture ou en fermeture par pression selon que la pression exercée sur sa tête de vanne est sensiblement égale à la pression amont Pᵢₙ ou à la pression aval Pₒᵤₜ, et
- commandée en pression par ledit distributeur dudit dispositif fluidique d'alimentation, ou par un distributeur supplémentaire comportant un premier orifice relié à ladite ligne fluidique en amont dudit détendeur, un deuxième orifice relié à ladite ligne fluidique en aval dudit détendeur, et un troisième orifice dit de commande relié à la tête de la vanne supplémentaire, et adapté à commander l'ouverture ou la fermeture de la vanne supplémentaire, selon que son orifice de commande est connecté à son premier orifice ou à son deuxième orifice.

Le fluide d'intérêt peut être de l'hydrogène. La pile à combustible peut comporter un collecteur d'entrée anodique destiné à recevoir le fluide d'intérêt, et un collecteur d'entrée cathodique destiné à recevoir de l'air. Au moins une vanne d'alimentation en air peut être disposée sur une ligne fluidique d'alimentation en air reliée au collecteur d'entrée cathodique, la vanne d'alimentation en air :
- comportant une tête de vanne adaptée à occuper une position d'ouverture de vanne et une position de fermeture de vanne, et adaptée à être commandée en ouverture ou en fermeture par pression selon que la pression exercée sur sa tête de vanne est sensiblement égale à la pression amont Pᵢₙ ou à la pression aval Pₒᵤₜ ;
- étant commandée en pression par ledit distributeur dudit dispositif fluidique d'alimentation, ou par un distributeur de commande de la vanne d'alimentation en air, comportant un premier orifice relié à ladite ligne fluidique en amont dudit détendeur, un deuxième orifice relié à ladite ligne fluidique en aval dudit détendeur, et un troisième orifice dit de commande relié à la tête de la vanne d'alimentation en air, et adapté à commander l'ouverture ou la fermeture de la vanne d'alimentation en air, selon que son orifice de commande est connecté à son premier orifice ou à son deuxième orifice.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

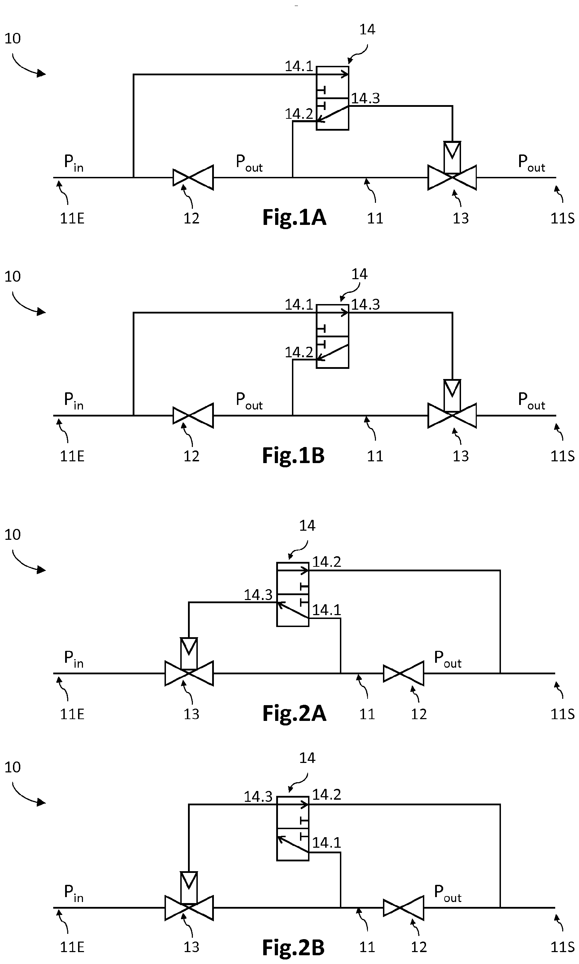

les figures 1A et 1B sont des vues schématiques d'un dispositif fluidique d'alimentation selon un premier mode de réalisation, dans lequel la vanne est disposée en aval du détendeur, en configuration de fermeture (fig.1A) et en configuration d'ouverture (fig.1B) ;
les figures 2A et 2B sont des vues schématiques d'un dispositif fluidique d'alimentation selon un deuxième mode de réalisation, dans lequel la vanne est disposée en amont du détendeur, en configuration de fermeture (fig.2A) et en configuration d'ouverture (fig.2B) ;

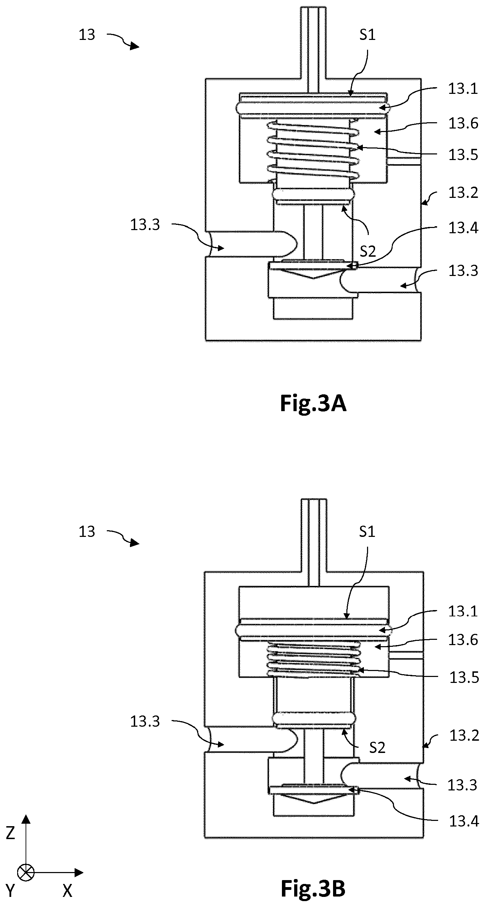

les figures 3A et 3B sont des vues schématiques, en coupe transversale, d'un exemple de vanne commandable par pression d'un dispositif fluidique d'alimentation selon le premier mode de réalisation, dont la chambre intermédiaire est mise à une pression égale à la pression de fermeture Pₒᵤₜ, en configuration de fermeture (fig.3A) et en configuration d'ouverture (fig.3B) ;

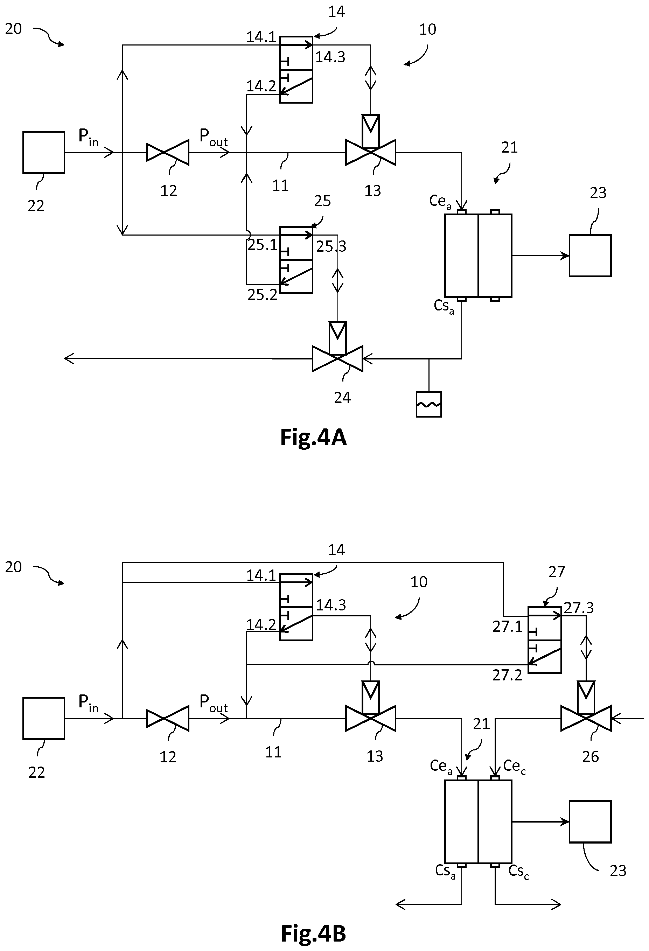

La figure 4A est une vue schématique d'un exemple de système électrochimique à pile à combustible comportant un dispositif fluidique d'alimentation selon un mode de réalisation, lequel assure en outre la commande d'une vanne supplémentaire ; et la figure 4B est une vue schématique d'un autre exemple de système électrochimique à pile à combustible comportant un dispositif fluidique d'alimentation en hydrogène selon un mode de réalisation, lequel assure en outre la commande d'une vanne d'alimentation en air.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, l'expression « comportant un » doit être comprise comme « comportant au moins un », sauf indication contraire.

L'invention porte d'une manière générale sur un dispositif fluidique d'alimentation adapté à recevoir un fluide d'intérêt à une pression amont Pᵢₙ et à fournir le fluide d'intérêt à une pression aval Pₒᵤₜ. Le dispositif d'alimentation comporte ainsi une ligne fluidique de circulation du fluide d'intérêt, sur laquelle sont disposés en série un détendeur et une vanne. La vanne est commandable en pression au moyen d'un distributeur dont le fluide pilote est le fluide d'intérêt présent dans la ligne fluidique. Par ailleurs, le fluide d'intérêt peut être un gaz ou un liquide.

Les figures 1A et 1B illustrent de manière schématique, un dispositif fluidique d'alimentation 10 selon un premier mode de réalisation, dans lequel la vanne 13 est disposée en aval du détendeur 12, en configuration de fermeture (fig.iA) et en configuration d'ouverture (fig.iB).

La ligne fluidique 11 comporte une entrée 11E destinée à recevoir du fluide d'intérêt à une pression amont non nulle Pᵢₙ. L'entrée 11E peut être reliée à une source de fluide d'intérêt sous pression, tel qu'un réservoir de stockage (non représenté). La pression amont Pᵢₙ peut être égale à plusieurs bars, voire à plusieurs dizaines ou centaines de bars. La ligne fluidique 11 comporte une sortie d'alimentation 11S destinée à fournir le fluide d'intérêt à une pression aval Pₒᵤₜ, selon que la vanne 13 est ouverte ou fermée. Le dispositif d'alimentation 10 peut comporter la source de fluide d'intérêt adaptée à fournir à l'entrée 11E le fluide d'intérêt à la pression amont Pᵢₙ, ou être relié à une telle source.

D'une manière générale, dans la suite de la description, le fluide d'intérêt est dit égal, ou sensiblement égal, à Pᵢₙ ou à Pₒᵤₜ selon que l'on se situe en amont ou en aval du détendeur 12, moyennant les pertes de charge, celles-ci pouvant être négligeables ou non. Autrement dit, dans la suite de la description, les pertes de charge entre le détendeur et la vanne, ainsi que celles éventuellement présentes dans les conduits reliant le distributeur à la ligne fluidique et à la vanne, sont négligées.

Le détendeur 12 est disposé sur la ligne fluidique 11, et est adapté à diminuer la pression du fluide d'intérêt de la pression amont Pᵢₙ à la pression aval Pₒᵤₜ. D'une manière générale, un détendeur 12 est un organe de régulation de la pression aval Pₒᵤₜ, c'est-à-dire qu'il est adapté à abaisser la pression du fluide d'intérêt le traversant à une valeur de consigne Pₒᵤₜ. Il peut occuper une position de fermeture lorsque la pression aval Pₒᵤₜ est supérieure à la pression amont. Par ailleurs, le détendeur peut, ou non, assurer un contrôle de la valeur du débit molaire du fluide d'intérêt, par exemple en faisant dépendre la valeur du débit molaire de la pression aval Pₒᵤₜ.

La vanne 13 est disposée sur la ligne fluidique 11, ici en aval du détendeur 12. Elle est adaptée à autoriser ou bloquer la circulation du fluide d'intérêt entre l'entrée 11E et la sortie 11S du dispositif d'alimentation 10. Pour cela, elle comporte de manière classique, comme illustré sur les fig.3A et 3B, une tête de vanne 13.1, un corps de vanne 13.2, un conduit interne 13.3 communiquant avec la ligne fluidique 11, et un obturateur 13.4 adapté à obturer ou non le conduit interne 13.3. La tête de vanne 13.1 est mobile en déplacement par rapport au corps de vanne 13.2, ce qui provoque un déplacement de l'obturateur 13.4 entre une position d'ouverture et une position de fermeture, autorisant ou bloquant alors la circulation du fluide d'intérêt dans le conduit interne 13.3 et donc dans la ligne fluidique 11.

La vanne 13 est à commande par pression, c'est-à-dire qu'elle est adaptée à être commandée en ouverture et en fermeture par une pression exercée par un fluide pilote sur la tête de vanne 13.1. Dans le cadre de l'invention, le fluide pilote est le fluide d'intérêt dont la pression peut être sensiblement égale à la pression Pᵢₙ ou à Pₒᵤₜ, moyennant, comme mentionné précédemment, les éventuelles pertes de charge. Aussi, la vanne 13 est adaptée à être commandée en ouverture ou en fermeture par pression, selon que le fluide d'intérêt exerce sur la tête de vanne 13.1 une pression sensiblement égale à Pᵢₙ ou à Pₒᵤₜ. D'une manière générale, la vanne 13 peut être fermée lorsque la tête de vanne 13.1 subit une pression sensiblement égale à Pᵢₙ, ou lorsqu'elle subit une pression sensiblement égale à Pₒᵤₜ. Dans cet exemple, la vanne 13 est fermée lorsque le fluide d'intérêt exerce sur la tête de vanne 13.1 une pression sensiblement égale à la pression aval Pₒᵤₜ. Elle est ouverte lorsque le fluide d'intérêt exerce sur la tête de vanne 13.1 une pression sensiblement égale à la pression amont Pᵢₙ.

Le distributeur 14 assure le pilotage de la vanne 13, c'est-à-dire la commande ou l'actionnement de celle-ci, au moyen d'un fluide pilote qui est le fluide d'intérêt présent dans la ligne fluidique 11, en réponse à son actionnement par un utilisateur. Il comporte au moins trois orifices 14.1, 14.2, 14.3 et peut occuper au moins deux positions, dites position d'ouverture et position de fermeture. Il s'agit alors d'un distributeur au moins 3/2 (pour trois orifices et deux positions). Le distributeur 14 est avantageusement à actionnement électrique et à isolation galvanique, en particulier dans le cas où le fluide d'intérêt est inflammable à l'air, comme c'est le cas de l'hydrogène. Son actionnement peut alors requérir une faible puissance électrique, selon notamment l'application du dispositif d'alimentation 10. D'autres types d'actionnements peuvent cependant être utilisés. Le distributeur 14 présente une configuration de fermeture de la vanne 13 et une configuration d'ouverture de la vanne 13, lesquelles sont décrites par la suite.

Le premier orifice 14.1 est relié à la ligne fluidique 11 en amont du détendeur 12 et reçoit ainsi le fluide d'intérêt à une pression sensiblement égale à la pression amont Pᵢₙ. Le deuxième orifice 14.2 est relié à la ligne fluidique 11 en aval du détendeur 12 et reçoit ainsi le fluide d'intérêt à une pression sensiblement égale à la pression aval Pₒᵤₜ. Par relié, on entend fluidiquement relié, c'est-à-dire en communication fluidique. Le troisième orifice 14.3, appelé orifice de commande, est relié à la tête de vanne 13.1 et peut ainsi mettre cette dernière en communication avec le fluide d'intérêt à une pression sensiblement égale à Pᵢₙ ou à Pₒᵤₜ.

D'une manière générale, le dispositif d'alimentation 10 peut être normalement fermé ou normalement ouvert. Le terme « normalement » se réfère à l'état du dispositif d'alimentation 10 lorsqu'il est inactif, c'est-à-dire lorsque le distributeur 14 n'est pas actionné ou activé par un utilisateur. L'entrée 11E de la ligne fluidique 11 reçoit le fluide d'intérêt à la pression amont Pᵢₙ.

Lorsque le dispositif d'alimentation 10 est normalement fermé, le distributeur 14 présente une configuration de fermeture de vanne, et en conséquence la vanne 13 est fermée. Le fluide d'intérêt ne s'écoule alors pas dans la ligne fluidique 11. La vanne 13 peut présenter deux configurations selon qu'elle est actionnable en ouverture soit par surpression à une pression d'ouverture sensiblement égale à la pression amont Pᵢₙ, soit par dépression à une pression d'ouverture sensiblement égale à la pression aval Pₒᵤₜ :
o La vanne 13 peut être actionnée en ouverture par surpression à une pression d'ouverture ici sensiblement égale à Pᵢₙ.
   - Elle peut ainsi être fermée lorsque sa tête de vanne subit une pression inférieure à une pression d'ouverture, par exemple lorsqu'elle subit une pression sensiblement égale à la pression aval Pₒᵤₜ, voire à la pression atmosphérique. Le distributeur 14 présente pour cela la configuration de fermeture dans laquelle l'orifice de commande 14.3 est connecté au deuxième orifice 14.2.
   - Elle est actionnée en ouverture par surpression, lorsque sa tête de vanne subit la pression d'ouverture ici sensiblement égale à la pression amont Pᵢₙ. Le distributeur 14 présente pour cela la configuration d'ouverture dans laquelle l'orifice de commande 14.3 est connecté au premier orifice 14.1.
∘ En variante, la vanne 13 peut être actionnée en ouverture par dépression à une pression d'ouverture ici sensiblement égale à Pₒᵤₜ.
   - Elle peut ainsi être fermée lorsque sa tête de vanne subit une pression supérieure à une pression d'ouverture, par exemple lorsqu'elle subit une pression sensiblement égale à la pression amont Pᵢₙ. Le distributeur 14 présente pour cela la configuration de fermeture dans laquelle l'orifice de commande 14.3 est connecté au premier orifice 14.1.
   - Elle est actionnée en ouverture par dépression, lorsque sa tête de vanne subit la pression d'ouverture ici sensiblement égale à la pression aval Pₒᵤₜ. Le distributeur 14 présente pour cela la configuration d'ouverture dans laquelle l'orifice de commande 14.3 est connecté au deuxième orifice 14.2.

En variante, le dispositif d'alimentation 10 peut être normalement ouvert lorsque le distributeur 14 n'est pas activé ou actionné par un utilisateur. Le distributeur 14 présente alors une configuration d'ouverture de vanne, et en conséquence la vanne 13 est ouverte. Le fluide d'intérêt peut alors d'écouler dans la ligne fluidique 11. Ici également, la vanne peut présenter deux configurations selon qu'elle est actionnée en fermeture soit par surpression à une pression de fermeture sensiblement égale à la pression amont Pᵢₙ, soit par dépression à une pression de fermeture sensiblement égale à la pression aval Pₒᵤₜ :
∘ La vanne 13 peut être actionnée en fermeture par surpression à une pression de fermeture ici sensiblement égale à Pᵢₙ.
   - Elle est ainsi ouverte lorsque sa tête de vanne subit une pression inférieure à la pression de fermeture, par exemple lorsqu'elle subit une pression sensiblement égale à la pression aval Pₒᵤₜ, voire à la pression atmosphérique. Le distributeur 14 présente pour cela la configuration d'ouverture dans laquelle l'orifice de commande 14.3 est connecté au deuxième orifice 14.2.
   - Elle est actionnée en fermeture par surpression, lorsque sa tête de vanne subit la pression de fermeture ici sensiblement égale à la pression amont Pᵢₙ. Le distributeur 14 présente pour cela la configuration de fermeture dans laquelle l'orifice de commande 14.3 est connecté au premier orifice 14.1.
∘ En variante, la vanne 13 la vanne 13 peut être actionnée en fermeture par dépression à une pression de fermeture ici sensiblement égale à Pₒᵤₜ.
   - Elle est ainsi ouverte lorsque sa tête de vanne subit une pression supérieure à la pression de fermeture, par exemple lorsqu'elle subit une pression sensiblement égale à la pression amont Pᵢₙ. Le distributeur 14 présente pour cela la configuration d'ouverture dans laquelle l'orifice de commande 14.3 est connecté au premier orifice 14.1.
   - Elle est actionnée en fermeture par dépression, lorsque sa tête de vanne subit la pression de fermeture ici sensiblement égale à la pression aval Pₒᵤₜ. Le distributeur 14 présente pour cela la configuration de fermeture dans laquelle l'orifice de commande 14.3 est connecté au deuxième orifice 14.2.

Dans l'exemple illustré sur les fig.iA et 1B, le dispositif d'alimentation 10 est normalement fermé, et la vanne 13 est configurée pour être fermée lorsque sa tête de vanne subit une pression sensiblement égale à la pression aval Pₒᵤₜ. Autrement dit, la vanne 13 est ici fermée lorsque le distributeur 14 n'est pas activé, et est actionnée en ouverture par surpression à une pression d'ouverture ici sensiblement égale à Pᵢₙ. Le distributeur 14 présente alors au repos une configuration de fermeture de vanne dans laquelle l'orifice de commande 14.3 est connecté au deuxième orifice 14.2. Lorsqu'un utilisateur actionne le distributeur 14, il passe alors dans une configuration d'ouverture de vanne, qui commande alors la vanne 13 en ouverture.

Le fonctionnement du dispositif d'alimentation 10 est maintenant décrit. La fig.iA illustre le dispositif d'alimentation 10 dans son état normalement fermé, c'est-à-dire que le distributeur 14 n'est pas actionné ou activé par un utilisateur, alors que le fluide d'intérêt est présent à l'entrée 11E à la pression amont Pᵢₙ. La vanne 13 est fermée, de sorte que le fluide d'intérêt ne s'écoule pas en sortie 11S de la ligne fluidique 11. Le distributeur 14 présente la configuration de fermeture dans laquelle l'orifice de commande 14.3 est connecté au deuxième orifice 14.2, mettant ainsi la tête de vanne 13.1 en communication fluidique avec le fluide d'intérêt à une pression sensiblement égale à la pression aval Pₒᵤₜ. Dans la mesure où la vanne est ici configurée pour être fermée lorsque la tête de vanne 13.1 subit une pression sensiblement égale à Pₒᵤₜ, la tête de vanne 13.1 occupe ici une position dans laquelle l'obturateur 13.4 ferme le conduit interne 13.3 et donc bloque l'écoulement du fluide d'intérêt dans la ligne fluidique 11.

La fig.iB illustre le dispositif d'alimentation 10 dans son état activé. Le distributeur 14 est alors actionné par un utilisateur, de sorte qu'il passe alors dans la configuration d'ouverture de vanne dans laquelle l'orifice de commande 14.3 est connecté au premier orifice 14.1, mettant ainsi la tête de vanne 13.1 en communication fluidique avec le fluide d'intérêt à une pression sensiblement égale à la pression amont Pᵢₙ. Dans la mesure où la vanne 13 est actionnable en ouverture par surpression à une pression d'ouverture ici sensiblement égale à Pᵢₙ, la tête de vanne 13.1 est alors déplacée et l'obturateur 13.4 occupe une position d'ouverture autorisant l'écoulement du fluide d'intérêt dans le conduit interne 13.3 et donc dans la ligne fluidique 11.

Par ailleurs, lorsque le distributeur 14 repasse dans une configuration de fermeture, l'orifice de commande 14.3 est alors reconnecté au deuxième orifice 14.2. Un régime transitoire a lieu dans lequel le fluide d'intérêt à pression Pᵢₙ, situé dans un conduit reliant l'orifice de commande 14.3 à la tête de vanne 13.1, se détend à la pression Pₒᵤₜ en rejoignant la ligne fluidique 11 via le deuxième orifice 14.2.

Ainsi, le dispositif d'alimentation 10 présente un coût énergétique associé à la commande de la vanne 13 particulièrement réduit, notamment vis-à-vis des vannes solénoïdes et des vannes à air comprimé, du fait de la mise à profit du fluide d'intérêt, et non pas d'un fluide pilote dédié, qui présente une différence de pression entre la pression amont Pᵢₙ et la pression aval Pₒᵤₜ. La commande est alors effectuée par un distributeur qui oriente alors vers la tête de vanne 13.1 le fluide d'intérêt à pression amont Pᵢₙ ou à pression aval Pₒᵤₜ selon que l'on souhaite ouvrir ou fermer la vanne 13. L'actionnement du distributeur 14 peut également présenter un coût énergétique réduit, notamment lorsqu'il est à actionnement électrique.

Le coût énergétique de fonctionnement du dispositif d'alimentation 10 est également réduit par le fait que, lorsque le distributeur 14 repasse en configuration de fermeture, le fluide d'intérêt contenu dans le conduit reliant l'orifice de commande 14.3 à la tête de vanne 13.1 est remis en communication avec la ligne fluidique 11 et s'y introduit par détente. Il n'y a donc pas de perte du fluide d'intérêt lors du passage du distributeur 14 d'une configuration à l'autre.

Le dispositif d'alimentation 10 présente de plus une grande fiabilité dans la mesure où la commande de la vanne 13 utilise un distributeur 14 et non pas un compresseur comme dans l'exemple des vannes à air comprimé. Il présente de plus un encombrement réduit et une masse faible.

Il permet également d'écarter les risques de sécurité que présentent par exemple les vannes pneumatiques à air comprimé, dans la mesure où il n'y a pas de risques de fuite d'un fluide pilote dédié jusque dans la ligne fluidique, puisque le fluide pilote est ici le fluide d'intérêt présent dans la ligne fluidique.

Les figures 2A et 2B illustrent de manière schématique, un dispositif fluidique d'alimentation 10 selon un deuxième mode de réalisation, dans lequel la vanne 13 est disposée en amont du détendeur 12, en configuration de fermeture (fig.2A) et en configuration d'ouverture (fig.2B).

Le dispositif d'alimentation 10 diffère de celui illustré sur les fig.iA et 1B notamment par la position de la vanne 13 vis-à-vis du détendeur 12. Par ailleurs, dans cet exemple, la vanne 13 est également fermée lorsque le distributeur 14 n'est pas actionné par un utilisateur. De plus, elle est actionnable en ouverture par dépression à une pression d'ouverture ici sensiblement égale à la pression aval Pₒᵤₜ. Autrement dit, elle est actionnée en ouverture lorsque sa tête de vanne 13.1 subit une pression d'ouverture du fluide d'intérêt ici sensiblement égale à la pression aval Pₒᵤₜ.

La fig2A illustre le dispositif d'alimentation 10 dans son état normalement fermé, c'est-à-dire que le distributeur 14 n'est pas actionné ou activé par un utilisateur. La vanne 13 est fermée, de sorte que le fluide d'intérêt ne s'écoule pas en sortie 11S de la ligne fluidique 11. Le distributeur 14 présente alors la configuration de fermeture dans laquelle l'orifice de commande 14.3 est connecté au premier orifice 14.1, mettant ainsi la tête de vanne 13.1 en communication fluidique avec le fluide d'intérêt à une pression sensiblement égale à la pression amont Pᵢₙ. Dans la mesure où la vanne est ici configurée pour être fermée lorsque la tête de vanne 13.1 subit une pression sensiblement égale à Pᵢₙ, la tête de vanne 13.1 occupe ici une position dans laquelle l'obturateur 13.4 ferme le conduit interne 13.3 et donc bloque l'écoulement du fluide d'intérêt dans la ligne fluidique 11.

La fig.2B illustre le dispositif d'alimentation 10 dans son état activé. Le distributeur 14 est alors actionné par un utilisateur, de sorte qu'il passe dans la configuration d'ouverture de vanne dans laquelle l'orifice de commande 14.3 est connecté au deuxième orifice 14.2, mettant ainsi la tête de vanne 13.1 en communication fluidique avec le fluide d'intérêt à une pression sensiblement égale à la pression aval Pₒᵤₜ. Dans la mesure où la vanne 13 est actionnable en ouverture par dépression à une pression d'ouverture ici sensiblement égale à Pₒᵤₜ, la tête de vanne 13.1 est alors déplacée et l'obturateur 13.4 occupe une position d'ouverture autorisant l'écoulement du fluide d'intérêt dans le conduit interne 13.3 et donc dans la ligne fluidique 11.

Par ailleurs, lorsque le distributeur 14 repasse dans une configuration de fermeture, l'orifice de commande 14.3 est alors reconnecté au premier orifice 14.1. Un régime transitoire a lieu dans lequel le fluide d'intérêt à pression Pₒᵤₜ, situé dans le conduit reliant l'orifice de commande 14.3 à la tête de vanne 13.1, est comprimé à la pression Pᵢₙ par le fluide d'intérêt dans la ligne fluidique entre la vanne 13 et le détendeur 12, via le premier orifice 14.1.

Les figures 3A et 3B illustrent un exemple de vanne 13 du dispositif fluidique selon le mode de réalisation, en configuration de fermeture (fig.3A) et en configuration d'ouverture (fig.3B). La vanne 13 est ici similaire ou identique à celle illustrée sur les fig.iA et 1B : elle est fermée lorsque le distributeur 14 n'est pas activé par un utilisateur, et est actionnable en ouverture par surpression à une pression d'ouverture ici sensiblement égale à la pression amont Pᵢₙ. Autrement dit, elle est actionnée en ouverture lorsque le fluide d'intérêt applique sur une tête de vanne 13.1 une pression d'ouverture sensiblement égale à la pression amont Pᵢₙ, supérieure à la pression Pₒᵤₜ de repos.

La vanne 13 comporte une tête de vanne 13.1, un corps 13.2 dans lequel est agencé un conduit interne 13.3 qui s'étend entre une entrée et une sortie et forme une partie de la ligne fluidique 11, et un obturateur 13.4 fixé à la tête de vanne 13.1 par une tige. Les configurations d'ouverture et de fermeture de la vanne 13 sont liées à la position de la tête de vanne 13.1, et donc de l'obturateur 13.4 dans le conduit interne 13.3, la tête de vanne étant montée mobile en déplacement par rapport au corps 13.2. La tête de vanne 13.1 est contrainte en déplacement par un organe de rappel 13.5, tel qu'un ressort, situé dans une chambre intermédiaire 13.6. La chambre intermédiaire 13.6 est traversée de manière étanche par la tige. Par ailleurs, la tête de vanne 13.1 est reliée à l'orifice de commande 14.3 du distributeur 14 par un conduit étanche, de sorte que la tête de vanne 13.1 est en contact avec le fluide d'intérêt, lequel peut exercer sur la tête de vanne 13.1 une pression sensiblement égale à la pression amont Pᵢₙ, ou une pression sensiblement égale à la pression aval Pₒᵤₜ. Comme mentionné précédemment, par pression sensiblement égale à une valeur donnée, on entend ici que la pression est égale à cette valeur moyennant les pertes de charge éventuelles.

Comme mentionné précédemment, la vanne 13 est ici fermée lorsque le distributeur 14 n'est pas activé par un utilisateur (le fluide d'intérêt exerce sur la tête de vanne 13.1 une pression sensiblement égale à la pression aval Pₒᵤₜ, inférieure à la pression d'ouverture Pᵢₙ). Elle est actionnée en ouverture par surpression lorsque le fluide d'intérêt exerce sur la tête de vanne 13.1 la pression d'ouverture ici sensiblement égale à la pression amont Pᵢₙ.

Ainsi, comme l'illustre la fig.3A, la vanne 13 est fermée lorsqu'elle n'est pas actionnée en ouverture par le distributeur 14. Ainsi, l'orifice de commande 14.3 est connecté au deuxième orifice 14.2, de sorte que le fluide d'intérêt exerce sur la tête de vanne 13.1 une pression sensiblement égale à la pression aval Pₒᵤₜ, donc inférieure à la pression d'ouverture Pᵢₙ. L'organe de rappel 13.5 repousse donc la tête de vanne 13.1 suivant la direction +Z, ce qui provoque l'obturation du conduit interne 13.3 (contact étanche entre l'obturateur 13.4 et un siège de vanne) et donc le blocage de l'écoulement du fluide d'intérêt dans la ligne fluidique 11.

Comme l'illustre la fig.3B, lorsque la vanne 13 est actionnée en ouverture par le distributeur 14, l'orifice de commande 14.3 est connecté au premier orifice 14.1, de sorte que le fluide d'intérêt exerce sur la tête de vanne 13.1 la pression d'ouverture ici sensiblement égale à la pression amont Pᵢₙ. La tête de vanne 13.1 est donc déplacée suivant la direction - Z, ce qui provoque l'écartement de l'obturateur 13.4 vis-à-vis du siège de vanne, autorisant alors l'écoulement du fluide d'intérêt dans le conduit interne 13.3 et donc dans la ligne fluidique 11.

Cependant, les inventeurs ont constaté que, après une phase d'ouverture de la vanne 13, et lorsque la fermeture de la vanne 13 est commandée par le distributeur 14, la fermeture étanche de l'obturateur 13.4 contre le siège peut être mise en défaut. C'est le cas notamment lorsque la chambre intermédiaire 13.6 :
- d'une part, est soumise à une pression Pᵢₙₜₑᵣₘ différente de la pression de fermeture, par exemple est soumise à une pression inférieure à la pression aval Pₒᵤₜ ; et
- d'autre part, subit une première force F₁, orientée vers la direction -Z, et sensiblement égale à Pₒᵤₜ.S1, où S₁ est la surface de la tête de vanne 13.1 contre laquelle le fluide d'intérêt à la pression Pₒᵤₜ est en contact, et une deuxième force F₂, orientée vers une direction opposée, ici la direction +Z, et sensiblement égale à Pₒᵤₜ.S2, où S2 est une surface contre laquelle le fluide d'intérêt présent dans le conduit interne 13.3 à la pression Pₒᵤₜ est en contact, avec S2 différente de S1 et ici inférieure à S1.

Les inventeurs ont ainsi constaté que le défaut de fermeture étanche peut être écarté lorsque la chambre intermédiaire 13.6 est portée à une pression Pᵢₙₜₑᵣₘ sensiblement égale à la pression de fermeture, à 10% près, et de préférence à 5% près, c'est-à-dire ici à la pression aval Pₒᵤₜ. La chambre intermédiaire 13.6 peut être reliée à la ligne fluidique 11 en aval du détendeur 12, de sorte qu'elle est remplie du fluide d'intérêt à la pression Pₒᵤₜ. Elle peut être remplie d'un fluide inerte, par exemple de l'azote. Dans le cadre d'une application de la vanne 13 sur une ligne cathodique d'une pile à combustible alimentée en air, la chambre intermédiaire 13.6 peut être reliée à la sortie cathodique de la pile à combustible, dont le fluide sortant est alors de l'air appauvri en oxygène, donc sensiblement inerte.

Dans cet exemple, le dispositif d'alimentation 1 est normalement fermé et la vanne 13 est actionnable en ouverture par surpression à une pression d'ouverture ici sensiblement égale à Pᵢₙ. Autrement dit, la vanne 13 est actionnée en fermeture lorsque le fluide d'intérêt applique sur la tête de vanne une pression inférieure à la pression d'ouverture Pᵢₙ, ici une pression sensiblement égale à la pression aval Pₒᵤₜ. En variante, la vanne 13 peut être actionnable en ouverture par dépression, à une pression d'ouverture ici sensiblement égale à Pₒᵤₜ. Autrement dit, la vanne 13 est actionnée en fermeture lorsque la tête de vanne subit une pression supérieure à la pression d'ouverture Pₒᵤₜ, ici une pression sensiblement égale à la pression amont Pᵢₙ, comme c'est le cas dans l'exemple illustré sur les fig.2A et 2B. Dans ce cas, la chambre intermédiaire 13.6 est de préférence portée à une pression sensiblement égale à la pression de fermeture, ici à la pression amont Pᵢₙ.

La figure 4A illustre un exemple d'application du dispositif fluidique d'alimentation 10 selon le premier mode de réalisation dans le cadre d'un système électrochimique 20 à pile à combustible 21. Dans cet exemple, la pile à combustible 21 est alimentée en hydrogène à l'anode. On considérera ici en particulier le côté anode de la pile à combustible 21, celle-ci étant alors alimentée en hydrogène. L'invention reste cependant applicable au côté cathodique de la pile à combustible 21, le fluide d'intérêt étant alors de l'oxygène stocké initialement sous pression. Le système électrochimique 20 est ici représenté de manière simplifiée et peut comporter, en plus des éléments illustrés, des organes fluidiques et/ou thermiques et/ou électriques supplémentaires (non représentés).

Le système électrochimique 20 comporte un dispositif fluidique 10 d'alimentation de la pile à combustible 21, le fluide d'intérêt étant ici de l'hydrogène. Il comporte avantageusement au moins une vanne supplémentaire 24, ici une vanne de purge, commandable par pression par un distributeur supplémentaire 25 dont le fluide pilote est le fluide d'intérêt circulant dans la ligne fluidique 11.

Le système électrochimique 20 comporte un réservoir 22 de stockage du fluide d'intérêt sous pression, ici d'hydrogène, à une pression supérieure ou égale à la pression amont Pᵢₙ, par exemple à plusieurs bars ou dizaines de bars. Le réservoir 22 alimente le côté anodique de la pile à combustible 21 par l'intermédiaire du dispositif fluidique d'alimentation 10.

Le dispositif fluidique d'alimentation 10 relie le réservoir 22 d'hydrogène à un collecteur d'entrée anodique Ceₐ de la pile à combustible 21. Il est identique ou similaire à celui décrit précédemment en référence aux fig.iA et 1B. Il comporte ainsi une ligne fluidique 11 sur laquelle est disposé un détendeur 12 en sortie du réservoir 22, et une vanne 13 entre le détendeur 12 et le collecteur d'entrée anodique Ceₐ. La vanne 13 est commandée par le distributeur 14 comme décrit précédemment.

La pile à combustible 21 comporte au moins une cellule électrochimique, et ici un empilement de cellules électrochimiques (non représentées). Chaque cellule comporte une anode et une cathode séparées l'une de l'autre par une membrane électrolytique, cet ensemble formant un assemblage membrane électrodes (AME). L'anode, la membrane et la cathode sont des éléments classiques connus de l'homme du métier et ne sont donc pas décrites en détail. Chaque assemblage est séparé de celui des cellules adjacentes par des plaques bipolaires, adaptées à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Elle peut également assurer l'écoulement d'un fluide caloporteur entre les cellules de manière à permettre l'évacuation de la chaleur produite.

La pile à combustible 21 comporte deux collecteurs d'entrée distincts, l'un anodique Ceₐ et l'autre cathodique Ce_{c}, destinés à assurer l'injection fluidique des gaz d'alimentation jusqu'aux cellules, et deux collecteurs de sorties Csₐ, Cs_{c} distincts permettant d'évacuer les gaz d'alimentation non réagis et des espèces non réactives hors de la pile à combustible 21. Ainsi, l'hydrogène est injecté dans la pile à combustible 21 par le collecteur d'entrée anodique Ceₐ qui l'amène jusqu'aux cellules électrochimiques. L'hydrogène non réagi et les espèces non réactives sont ensuite évacués par le collecteur de sortie Csₐ correspondant. La pile à combustible 21 est par ailleurs connectée à une charge électrique 23 et lui fournit de l'énergie électrique.

Ainsi, en fonctionnement, le dispositif fluidique d'alimentation 10 reçoit ainsi de l'hydrogène à partir du réservoir 22 à une pression amont, ici égale à Pᵢₙ. L'hydrogène circule dans la ligne fluidique 11 et traverse le détendeur 12 qui diminue la pression à la pression aval Pₒᵤₜ. De l'hydrogène rejoint également le premier orifice 14.1 du distributeur 14. Comme décrit précédemment, dans la mesure où le dispositif d'alimentation 10 est normalement fermé et que la vanne 13 est actionnable en ouverture par surpression à la pression d'ouverture Pᵢₙ, le distributeur 14 présente à l'état de repos une configuration de fermeture de vanne, de sorte que l'orifice de commande 14.3 est connecté au deuxième orifice 14.2. La tête de vanne 13.1 est alors soumise à une pression inférieure à la pression d'ouverture Pᵢₙ, ici à une pression sensiblement égale à la pression aval Pₒᵤₜ du fluide d'intérêt, ce qui maintient la vanne 13 en configuration fermée.

La fig.4A illustre le système électrochimique 20 dans lequel le dispositif d'alimentation 1 est activé. L'actionnement du distributeur 14 par un utilisateur se traduit par la connexion de l'orifice de commande 14.3 avec le premier orifice 14.1. La tête de vanne 13.1 est alors soumise à une pression d'ouverture sensiblement égale à la pression amont Pᵢₙ du fluide d'intérêt, ce qui provoque l'ouverture de la vanne 13.

Lorsque le dispositif d'alimentation 1 n'est plus activé, le distributeur 14 revient à l'état de repos dans lequel l'orifice de commande 14.3 est alors connecté au deuxième orifice 14.2. Dans un régime transitoire, le fluide d'intérêt au contact de la tête de vanne 13.1 à une pression sensiblement égale à la pression amont Pᵢₙ se détend jusqu'à une pression sensiblement égale à la pression Pₒᵤₜ en rejoignant la ligne fluidique 11 en aval du détendeur 12.

Ainsi, la vanne 13 est actionnée en ouverture/fermeture par le distributeur 14 au moyen d'un fluide pilote qui est le fluide d'intérêt circulant dans la ligne fluidique 11. Le fait que le deuxième orifice 14.2 soit relié à la ligne fluidique 11 permet de ne pas perdre du fluide d'intérêt lors de la fermeture de la vanne 13. La réduction du coût énergétique peut être importante, notamment lorsque le système électrochimique 20 comporte plusieurs vannes d'alimentation en hydrogène ou en oxygène, lesquelles peuvent être actionnées régulièrement au cours du fonctionnement de la pile à combustible 21, comme le décrit notamment la demande de brevet EP3109934.

La vanne de purge 24 est commandée ici par le distributeur supplémentaire 25. En variante, ce dernier peut être absent, de sorte que le distributeur 14 commande de manière simultanée l'ouverture/fermeture de la vanne 13 et de la vanne supplémentaire 24. La vanne de purge 24 est ici similaire ou identique à la vanne 13 décrite en référence aux fig.iA et 1B. Elle est de préférence ouverte lorsque le distributeur 25 n'est pas activé, et peut être actionnée en ouverture par surpression ou dépression, comme décrit précédemment. En variante, elle peut être fermée lorsque le distributeur 25 n'est pas activé, et peut être actionnée en fermeture par surpression ou dépression.

Le distributeur supplémentaire 25 comporte un premier orifice 25.1 relié à la ligne fluidique 11 en amont du détendeur 12, un deuxième orifice 25.2 relié à la ligne fluidique 11 en aval du détendeur 12, et un orifice de commande 25.3 relié à la tête de la vanne de purge 24. L'actionnement de la vanne de purge 24 par le distributeur 25 est similaire au fonctionnement décrit précédemment, et n'est pas repris ici. Ainsi, l'actionnement de la vanne supplémentaire 24 requiert un coût énergétique particulièrement réduit dans la mesure où le différentiel de pression du fluide d'intérêt est mis à profit pour commander également cette vanne 24.

La figure 4B illustre un autre exemple d'application du dispositif fluidique d'alimentation 10 selon le premier mode de réalisation dans le cadre d'un système électrochimique 20 à pile à combustible 21. Dans cet exemple, le dispositif d'alimentation 10 est disposé sur la ligne fluidique anodique et alimente la pile à combustible 21 en hydrogène. La pile à combustible 21 est alimentée en air du côté cathodique, et comporte une vanne 26 d'alimentation en air, commandée par pression par un distributeur dédié 27. En variante, le distributeur dédié 27 peut être absent, de sorte que le distributeur 14 commande de manière simultanée l'ouverture/fermeture de la vanne 13 et de la vanne 26 d'alimentation en air.

La vanne d'alimentation cathodique 26 est ici similaire ou identique à la vanne anodique d'alimentation 13. Elle est de préférence fermée lorsque le distributeur 27 n'est pas activé, et peut être actionnée en ouverture par surpression ou dépression, comme décrit précédemment. En variante, elle peut être ouverte lorsque le distributeur 27 n'est pas activé, et peut être actionnée en fermeture par surpression ou dépression.

Le distributeur cathodique 27 comporte un premier orifice 27.1 relié à la ligne fluidique 11 en amont du détendeur 12, un deuxième orifice 27.2 relié à la ligne fluidique 11 en aval du détendeur 12, et un orifice de commande 27.3 relié à la tête de la vanne d'alimentation cathodique 26. Cette dernière est ici similaire ou identique à celle décrite en référence aux fig.iA et 1B, et est fermée lorsque le distributeur 27 n'est pas activé, et peut être actionnée en ouverture sur surpression, c'est-à-dire lorsque sa tête de vanne subit un fluide d'intérêt à la pression d'ouverture sensiblement égale à la pression amont Pᵢₙ. L'actionnement de la vanne d'alimentation cathodique 26 par le distributeur 27 est similaire au fonctionnement décrit précédemment, et n'est pas repris ici. Ainsi, l'actionnement de la vanne d'alimentation cathodique 26 requiert un coût énergétique particulièrement réduit dans la mesure où le différentiel de pression du fluide d'intérêt est également mis à profit pour commander cette vanne 26.

Des modes de réalisation particuliers viennent d'être décrits. Différentes variantes et modifications apparaîtront à l'homme du métier. Ainsi, les différents exemples décrits précédemment peuvent être combinés, de sorte que le système électrochimique 20 peut comporter plusieurs vannes supplémentaires, tant du côté anodique que tu côté cathodique, commandées en pression par le fluide d'intérêt circulant dans la ligne fluidique du dispositif fluidique d'alimentation 10 selon le premier ou le deuxième mode de réalisation.

## Revendications

1. Dispositif fluidique (10) d'alimentation en fluide d'intérêt, comprenant :
∘ une ligne fluidique (11) de circulation du fluide d'intérêt, comportant une entrée (11E) destinée à recevoir le fluide d'intérêt à une pression amont Pᵢₙ ;
∘ un détendeur (12), disposé sur la ligne fluidique (11), adapté à diminuer la pression du fluide d'intérêt de la pression amont à une pression aval Pₒᵤₜ ;
∘ une vanne (13), disposée sur la ligne fluidique (11) en amont ou aval du détendeur (12), comportant une tête de vanne (13.1) adaptée à occuper une position d'ouverture de vanne et une position de fermeture de vanne ;
caractérisé :
∘ en ce que la vanne (13) est adaptée à être commandée en ouverture ou en fermeture par pression selon qu'une pression exercée sur la tête de vanne (13.1) est sensiblement égale à la pression amont Pᵢₙ ou à la pression aval Pₒᵤₜ ;
∘ et en ce qu'il comprend un distributeur (14),
• comportant un premier orifice (14.1) relié à la ligne fluidique (11) en amont du détendeur (12), un deuxième orifice (14.2) relié à la ligne fluidique (11) en aval du détendeur (12), et un troisième orifice (14.3) dit de commande relié à la tête de vanne (13.1),
• adapté à commander l'ouverture ou la fermeture de la vanne (13), selon que l'orifice de commande (14.3) est connecté au premier orifice (14.1) ou au deuxième orifice (14.2).

2. Dispositif fluidique (10) selon la revendication 1, dans lequel le distributeur (14) est configuré de sorte que la vanne (13) est fermée lorsque le fluide d'intérêt exerce sur la tête de vanne (13.1) une pression dite de fermeture sensiblement égale à la pression du fluide d'intérêt dans la ligne fluidique (11) en entrée de la vanne (13).

3. Dispositif fluidique (10) selon la revendication 1 ou 2, dans lequel :
∘ la vanne (13) est disposée en aval du détendeur (12), et est adaptée à être ouverte lorsque le fluide d'intérêt exerce sur la tête de vanne (13.1) une pression sensiblement égale à la pression amont Pᵢₙ, et à être fermée lorsque le fluide d'intérêt exerce sur la tête de vanne (13.1) une pression sensiblement égale à la pression aval Pₒᵤₜ ;
∘ le distributeur (14) présente :
• une configuration d'ouverture de vanne dans laquelle l'orifice de commande (14.3) est connecté au premier orifice (14.1), mettant ainsi la tête de vanne (13.1) en communication avec le fluide d'intérêt à une pression sensiblement égale à la pression amont Pᵢₙ, et
• une configuration de fermeture de vanne dans laquelle l'orifice de commande (14.3) est connecté au deuxième orifice (14.2), mettant ainsi la tête de vanne (13.1) en communication avec le fluide d'intérêt à une pression sensiblement égale à la pression aval Pₒᵤₜ.

4. Dispositif fluidique (10) selon la revendication 1 ou 2, dans lequel :
∘ la vanne (13) est disposée en amont du détendeur (12), et est adaptée à être ouverte lorsque le fluide d'intérêt exerce sur la tête de vanne (13.1) une pression sensiblement égale à la pression aval Pₒᵤₜ, et à être fermée lorsque le fluide d'intérêt exerce sur la tête de vanne (13.1) une pression sensiblement égale à la pression amont Pᵢₙ ;
∘ le distributeur (14) présente :
• une configuration d'ouverture de vanne dans laquelle l'orifice de commande (14.3) est connecté au deuxième orifice (14.2), mettant ainsi la tête de vanne (13.1) en communication avec le fluide d'intérêt à une pression sensiblement égale à la pression aval Pₒᵤₜ, et
• une configuration de fermeture de vanne dans laquelle l'orifice de commande (14.3) est connecté au premier orifice (14.1), mettant ainsi la tête de vanne (13.1) en communication avec le fluide d'intérêt à une pression sensiblement égale à la pression amont Pᵢₙ.

5. Dispositif fluidique (10) selon l'une quelconque des revendications 1 à 4 et selon la revendication 2, dans lequel la vanne (13) comporte une chambre intermédiaire (13.6), située entre la tête de vanne (13.1) et un conduit interne (13.3) communiquant avec la ligne fluidique (11), et traversée de manière étanche par une tige reliant la tête de vanne (13.1) à un obturateur (13.4) du conduit interne (13.3), la chambre intermédiaire (13.6) étant mise à une pression sensiblement égale à la pression de fermeture.

6. Dispositif fluidique (10) selon la revendication 5, dans lequel la chambre intermédiaire (13.6) est reliée à une partie de ladite ligne fluidique (11) dans laquelle le fluide d'intérêt présente la pression de fermeture.

7. Dispositif fluidique (10) selon l'une quelconque des revendications 1 à 6, dans lequel le distributeur (14) est à commande électrique.

8. Système électrochimique (20), comprenant :
∘ un réservoir (22) de stockage d'un fluide d'intérêt à une pression supérieure ou égale à la pression amont Pᵢₙ ;
∘ une pile à combustible (21), comportant au moins un collecteur d'entrée (Ceₐ, Ce_{c}) adapté à assurer l'écoulement du fluide d'intérêt dans la pile à combustible (21) ;
∘ au moins un dispositif fluidique d'alimentation (10) selon l'une quelconque des revendications précédentes, reliant le réservoir (22) au collecteur d'entrée (Ceₐ, Ce_{c}), le fluide d'intérêt étant de l'hydrogène ou de l'oxygène.

9. Système électrochimique (20) selon la revendication 8, comportant :
∘ au moins une vanne supplémentaire (24),
• comportant une tête de vanne adaptée à occuper une position d'ouverture de vanne et une position de fermeture de vanne, et adaptée à être commandée en ouverture ou en fermeture par pression selon que la pression exercée sur sa tête de vanne est sensiblement égale à la pression amont Pᵢₙ ou à la pression aval Pₒᵤₜ, et
• commandée en pression par ledit distributeur (14) dudit dispositif fluidique d'alimentation (10), ou par un distributeur supplémentaire (25) comportant un premier orifice (25.1) relié à ladite ligne fluidique (11) en amont dudit détendeur (12), un deuxième orifice (25.2) relié à ladite ligne fluidique (11) en aval dudit détendeur (12), et un troisième orifice (25.3) dit de commande relié à la tête de la vanne supplémentaire (24), et adapté à commander l'ouverture ou la fermeture de la vanne supplémentaire (24), selon que son orifice de commande (25.3) est connecté à son premier orifice (25.1) ou à son deuxième orifice (25.2).

10. Système électrochimique (20) selon la revendication 8 ou 9, dans lequel :
∘ le fluide d'intérêt est de l'hydrogène ;
∘ la pile à combustible (21) comporte un collecteur d'entrée anodique (Ceₐ) destiné à recevoir le fluide d'intérêt, et un collecteur d'entrée cathodique (Ce_{c}) destiné à recevoir de l'air ;
∘ au moins une vanne (26) d'alimentation en air est disposée sur une ligne fluidique d'alimentation en air reliée au collecteur d'entrée cathodique (Ce_{c}),
• comportant une tête de vanne adaptée à occuper une position d'ouverture de vanne et une position de fermeture de vanne, et adaptée à être commandée en ouverture ou en fermeture par pression selon que la pression exercée sur sa tête de vanne est sensiblement égale à la pression amont Pᵢₙ ou à la pression aval Pₒᵤₜ ;
• commandée en pression par ledit distributeur (14) dudit dispositif fluidique d'alimentation (10), ou par un distributeur (27) de commande de la vanne (26) d'alimentation en air, comportant un premier orifice (27.1) relié à ladite ligne fluidique (11) en amont dudit détendeur (12), un deuxième orifice (27.2) relié à ladite ligne fluidique (11) en aval dudit détendeur (12), et un troisième orifice (27.3) dit de commande relié à la tête de la vanne (26) d'alimentation en air, et adapté à commander l'ouverture ou la fermeture de la vanne (26) d'alimentation en air, selon que son orifice de commande (27.3) est connecté à son premier orifice (27.1) ou à son deuxième orifice (27.2).

## Patentansprüche

1. Fluidische Vorrichtung (10) zur Versorgung mit einem gewünschten Fluid, die Folgendes beinhaltet:
∘ eine Fluidleitung (11) zur Zirkulation des gewünschten Fluids, die einen Einlass (11E) umfasst, der dazu bestimmt ist, das gewünschte Fluid mit einem Einlassdruck Pᵢₙ aufzunehmen;
∘ einen Entspanner (12), der in der Fluidleitung (11) angeordnet ist und dazu angepasst ist, den Druck des gewünschten Fluids von dem Einlassdruck auf einen Auslassdruck Pₒᵤₜ zu verringern;
∘ ein Ventil (13), das in der Fluidleitung (11) stromaufwärts oder stromabwärts des Entspanners (12) angeordnet ist und das einen Ventilkopf (13.1) umfasst, der dazu angepasst ist, eine Ventilöffnungsstellung und eine Ventilschließstellung einzunehmen;
**dadurch gekennzeichnet**,
∘ dass das Ventil (13) dazu angepasst ist, durch Druck zum Öffnen oder zum Schließen angesteuert zu werden, je nachdem, ob ein auf den Ventilkopf (13.1) ausgeübter Druck im Wesentlichen gleich dem Einlassdruck Pᵢₙ oder dem Auslassdruck Pₒᵤₜ ist;
∘ und dass sie einen Verteiler (14) beinhaltet,
• der einen ersten Anschluss (14.1), der mit der Fluidleitung (11) stromaufwärts des Entspanners (12) verbunden ist, einen zweiten Anschluss (14.2), der mit der Fluidleitung (11) stromabwärts des Entspanners (12) verbunden ist, und einen dritten Anschluss (14.3), der als Steueranschluss bezeichnet wird und mit dem Ventilkopf (13.1) verbunden ist, umfasst,
• der dazu angepasst ist, das Öffnen oder das Schließen des Ventils (13) zu steuern, je nachdem, ob der Steueranschluss (14.3) mit dem ersten Anschluss (14.1) oder mit dem zweiten Anschluss (14.2) verbunden ist.

2. Fluidische Vorrichtung (10) nach Anspruch 1, wobei der Verteiler (14) so konfiguriert ist, dass das Ventil (13) geschlossen ist, wenn das gewünschte Fluid einen Druck, der als Schließdruck bezeichnet wird und der im Wesentlichen gleich dem Druck des gewünschten Fluids in der Fluidleitung (11) am Eingang des Ventils (13) ist, auf den Ventilkopf (13.1) ausübt.

3. Fluidische Vorrichtung (10) nach Anspruch 1 oder 2, wobei:
∘ das Ventil (13) stromabwärts des Entspanners (12) angeordnet ist und dazu angepasst ist, geöffnet zu sein, wenn das gewünschte Fluid einen Druck, der im Wesentlichen gleich dem Einlassdruck Pᵢₙ ist, auf den Ventilkopf (13.1) ausübt, und geschlossen zu sein, wenn das gewünschte Fluid einen Druck, der im Wesentlichen gleich dem Auslassdruck Pₒᵤₜ ist, auf den Ventilkopf (13.1) ausübt;
∘ der Verteiler (14) Folgendes aufweist:
• eine Ventilöffnungskonfiguration, bei der der Steueranschluss (14.3) mit dem ersten Anschluss (14.1) verbunden ist, wodurch der Ventilkopf (13.1) mit dem gewünschten Fluid mit einem Druck, der im Wesentlichen gleich dem Einlassdruck Pᵢₙ ist, in Kommunikation gebracht wird, und
• eine Ventilschließkonfiguration, bei der der Steueranschluss (14.3) mit dem zweiten Anschluss (14.2) verbunden ist, wodurch der Ventilkopf (13.1) mit dem gewünschten Fluid mit einem Druck, der im Wesentlichen gleich dem Auslassdruck Pₒᵤₜ ist, in Kommunikation gebracht wird.

4. Fluidische Vorrichtung (10) nach Anspruch 1 oder 2, wobei:
∘ das Ventil (13) stromaufwärts des Entspanners (12) angeordnet ist und dazu angepasst ist, geöffnet zu sein, wenn das gewünschte Fluid einen Druck, der im Wesentlichen gleich dem Auslassdruck Pout ist, auf den Ventilkopf (13.1) ausübt, und geschlossen zu sein, wenn das gewünschte Fluid einen Druck, der im Wesentlichen gleich dem Einlassdruck Pin ist, auf den Ventilkopf (13.1) ausübt;
∘ der Verteiler (14) Folgendes aufweist:
• eine Ventilöffnungskonfiguration, bei der der Steueranschluss (14.3) mit dem zweiten Anschluss (14.2) verbunden ist, wodurch der Ventilkopf (13.1) mit dem gewünschten Fluid mit einem Druck, der im Wesentlichen gleich dem Auslassdruck Pₒᵤₜ ist, in Kommunikation gebracht wird, und
• eine Ventilschließkonfiguration, bei der der Steueranschluss (14.3) mit dem ersten Anschluss (14.1) verbunden ist, wodurch der Ventilkopf (13.1) mit dem gewünschten Fluid mit einem Druck, der im Wesentlichen gleich dem Einlassdruck Pᵢₙ ist, in Kommunikation gebracht wird.

5. Fluidische Vorrichtung (10) nach einem der Ansprüche 1 bis 4 und nach Anspruch 2, wobei das Ventil (13) eine Zwischenkammer (13.6) umfasst, die sich zwischen dem Ventilkopf (13.1) und einem Innenkanal (13.3), der mit der Fluidleitung (11) kommuniziert, befindet und auf abgedichtete Weise von einer Stange durchquert wird, die den Ventilkopf (13.1) mit einem Absperrorgan (13.4) des Innenkanals (13.3) verbindet, wobei die Zwischenkammer (13.6) auf einen Druck im Wesentlichen gleich dem Schließdruck gebracht wird.

6. Fluidische Vorrichtung (10) nach Anspruch 5, wobei die Zwischenkammer (13.6) mit einem Teil der Fluidleitung (11) verbunden ist, in dem das gewünschte Fluid den Schließdruck aufweist.

7. Fluidische Vorrichtung (10) nach einem der Ansprüche 1 bis 6, wobei der Verteiler (14) elektrisch gesteuert ist.

8. Elektrochemisches System (20), das Folgendes beinhaltet:
∘ einen Behälter (22) zum Speichern eines gewünschten Fluids mit einem Druck größer als oder gleich dem Einlassdruck Pᵢₙ;
∘ eine Brennstoffzelle (21), die mindestens einen Eingangssammler (Ceₐ, Ce_{c}) umfasst, der dazu angepasst ist, das Strömen des gewünschten Fluids in der Brennstoffzelle (21) sicherzustellen;
∘ mindestens eine fluidische Versorgungsvorrichtung (10) nach einem der vorhergehenden Ansprüche, die den Behälter (22) mit dem Eingangssammler (Ceₐ, Ce_{c}) verbindet, wobei das gewünschte Fluid Wasserstoff oder Sauerstoff ist.

9. Elektrochemisches System (20) nach Anspruch 8, das Folgendes umfasst:
∘ mindestens ein Zusatzventil (24),
• das einen Ventilkopf umfasst, der dazu angepasst ist, eine Ventilöffnungsstellung und eine Ventilschließstellung einzunehmen, und das dazu angepasst ist, durch Druck zum Öffnen oder zum Schließen angesteuert zu werden, je nachdem, ob der auf seinen Ventilkopf ausgeübte Druck im Wesentlichen gleich dem Einlassdruck Pᵢₙ oder dem Auslassdruck Pₒᵤₜ ist, und
• das durch den Verteiler (14) der fluidischen Versorgungsvorrichtung (10) durch Druck gesteuert wird oder aber durch einen Zusatzverteiler (25), der einen ersten Anschluss (25.1), der mit der Fluidleitung (11) stromaufwärts des Entspanners (12) verbunden ist, einen zweiten Anschluss (25.2), der mit der Fluidleitung (11) stromabwärts des Entspanners (12) verbunden ist, und einen dritten Anschluss (25.3), der als Steueranschluss bezeichnet wird und mit dem Kopf des Zusatzventils (24) verbunden ist, umfasst, und der dazu angepasst ist, das Öffnen oder das Schließen des Zusatzventils (24) zu steuern, je nachdem, ob sein Steueranschluss (25.3) mit seinem ersten Anschluss (25.1) oder mit seinem zweiten Anschluss (25.2) verbunden ist.

10. Elektrochemisches System (20) nach Anspruch 8 oder 9, wobei:
∘ das gewünschte Fluid Wasserstoff ist;
∘ die Brennstoffzelle (21) einen anodischen Eingangssammler (Ceₐ), der dazu bestimmt ist, das gewünschte Fluid aufzunehmen, und einen kathodischen Eingangssammler (Ce_{c}), der dazu bestimmt ist, Luft aufzunehmen, umfasst;
∘ mindestens ein Luftversorgungsventil (26) in einer Fluidleitung zur Luftversorgung, die mit dem kathodischen Eingangssammler (Ce_{c}) verbunden ist, angeordnet ist,
• das einen Ventilkopf umfasst, der dazu angepasst ist, eine Ventilöffnungsstellung und eine Ventilschließstellung einzunehmen, und das dazu angepasst ist, durch Druck zum Öffnen oder zum Schließen angesteuert zu werden, je nachdem, ob der auf seinen Ventilkopf ausgeübte Druck im Wesentlichen gleich dem Einlassdruck Pᵢₙ oder dem Auslassdruck Pₒᵤₜ ist, und
• das durch den Verteiler (14) der fluidischen Versorgungsvorrichtung (10) durch Druck gesteuert wird oder aber durch einen Verteiler (27) zur Steuerung des Luftversorgungsventils (26), der einen ersten Anschluss (27.1), der mit der Fluidleitung (11) stromaufwärts des Entspanners (12) verbunden ist, einen zweiten Anschluss (27.2), der mit der Fluidleitung (11) stromabwärts des Entspanners (12) verbunden ist, und einen dritten Anschluss (27.3), der als Steueranschluss bezeichnet wird und mit dem Kopf des Luftversorgungsventils (26) verbunden ist, umfasst, und der dazu angepasst ist, das Öffnen oder das Schließen des Luftversorgungsventils (26) zu steuern, je nachdem, ob sein Steueranschluss (27.3) mit seinem ersten Anschluss (27.1) oder mit seinem zweiten Anschluss (27.2) verbunden ist.

## Claims

1. Fluidic device (10) for supplying a fluid of interest, comprising:
∘ a fluidic line (11) for circulation of the fluid of interest, having an inlet (11E) intended to receive the fluid of interest at an upstream pressure Pᵢₙ;
∘ a regulator (12), disposed on the fluidic line (11), designed to reduce the pressure of the fluid of interest from the upstream pressure to a downstream pressure Pₒᵤₜ;
∘ a valve (13), disposed on the fluidic line (11) upstream or downstream of the regulator (12), having a valve head (13.1) designed to take up a valve opening position and a valve closing position;
characterized
∘ in that the valve (13) is designed to be opened or closed by pressure depending on whether a pressure exerted on the valve head (13.1) is substantially equal to the upstream pressure Pᵢₙ or to the downstream pressure Pₒᵤₜ;
∘ and in that it comprises a distributor (14) which
• has a first orifice (14.1) connected to the fluidic line (11) upstream of the regulator (12), a second orifice (14.2) connected to the fluidic line (11) downstream of the regulator (12), and a third orifice (14.3), known as the control orifice, connected to the valve head (13.1), and
• is designed to open or close the valve (13) depending on whether the control orifice (14.3) is connected to the first orifice (14.1) or to the second orifice (14.2).

2. Fluidic device (10) according to Claim 1, wherein the distributor (14) is configured such that the valve (13) is closed when the fluid of interest exerts on the valve head (13.1) a pressure known as the closing pressure substantially equal to the pressure of the fluid of interest in the fluidic line (11) at the inlet of the valve (13).

3. Fluidic device (10) according to Claim 1 or 2, wherein:
∘ the valve (13) is disposed downstream of the regulator (12) and is designed to be open when the fluid of interest exerts on the valve head (13.1) a pressure substantially equal to the upstream pressure Pᵢₙ, and to be closed when the fluid of interest exerts on the valve head (13.1) a pressure substantially equal to the downstream pressure Pₒᵤₜ;
∘ the distributor (14) has:
• a valve opening configuration in which the control orifice (14.3) is connected to the first orifice (14.1), thereby putting the valve head (13.1) into communication with the fluid of interest at a pressure substantially equal to the upstream pressure Pᵢₙ, and
• a valve closing configuration in which the control orifice (14.3) is connected to the second orifice (14.2), thereby putting the valve head (13.1) into communication with the fluid of interest at a pressure substantially equal to the downstream pressure Pₒᵤₜ.

4. Fluidic device (10) according to Claim 1 or 2, wherein:
∘ the valve (13) is disposed upstream of the regulator (12) and is designed to be open when the fluid of interest exerts on the valve head (13.1) a pressure substantially equal to the downstream pressure Pₒᵤₜ, and to be closed when the fluid of interest exerts on the valve head (13.1) a pressure substantially equal to the upstream pressure Pᵢₙ;
∘ the distributor (14) has:
• a valve opening configuration in which the control orifice (14.3) is connected to the second orifice (14.2), thereby putting the valve head (13.1) into communication with the fluid of interest at a pressure substantially equal to the downstream pressure Pₒᵤₜ, and
• a valve closing configuration in which the control orifice (14.3) is connected to the first orifice (14.1), thereby putting the valve head (13.1) into communication with the fluid of interest at a pressure substantially equal to the upstream pressure Pᵢₙ.

5. Fluidic device (10) according to any one of Claims 1 to 4 and according to Claim 2, wherein the valve (13) has an intermediate chamber (13.6) which is situated between the valve head (13.1) and an internal duct (13.3) in communication with the fluidic line (11) and is passed through in a leaktight manner by a stem connecting the valve head (13.1) to a shut-off means (13.4) for the internal duct (13.3), the intermediate chamber (13.6) being put at a pressure substantially equal to the closing pressure.

6. Fluidic device (10) according to Claim 5, wherein the intermediate chamber (13.6) is connected to a part of said fluidic line (11) in which the fluid of interest exhibits the closing pressure.

7. Fluidic device (10) according to any one of Claims 1 to 6, wherein the distributor (14) is electrically controlled.

8. Electrochemical system (20) comprising:
∘ a reservoir (22) for storing a fluid of interest at a pressure greater than or equal to the upstream pressure Pᵢₙ;
∘ a fuel cell (21) having at least one inlet manifold (Ceₐ, Ce_{c}) designed to ensure the flow of the fluid of interest into the fuel cell (21);
∘ at least one fluidic supply device (10) according to any one of the preceding claims, connecting the reservoir (22) to the inlet manifold (Ceₐ, Ce_{c}), the fluid of interest being hydrogen or oxygen.

9. Electrochemical system (20) according to Claim 8, having:
∘ at least one additional valve (24) which
• has a valve head designed to take up a valve opening position and a valve closing position and designed to be opened or closed by pressure depending on whether the pressure exerted on its valve head is substantially equal to the upstream pressure Pᵢₙ or to the downstream pressure Pₒᵤₜ, and
• is pressure-controlled by said distributor (14) of said fluidic supply device (10), or by an additional distributor (25) which has a first orifice (25.1) connected to said fluidic line (11) upstream of said regulator (12), a second orifice (25.2) connected to said fluidic line (11) downstream of said regulator (12), and a third orifice (25.3) known as the control orifice connected to the head of the additional valve (24), and is designed to open or close the additional valve (24) depending on whether its control orifice (25.3) is connected to its first orifice (25.1) or to its second orifice (25.2).

10. Electrochemical system (20) according to Claim 8 or 9, wherein:
∘ the fluid of interest is hydrogen;
∘ the fuel cell (21) has an anodic inlet manifold (Ceₐ) intended to receive the fluid of interest, and a cathodic inlet manifold (Ce_{c}) intended to receive air;
∘ at least one air supply valve (26) is disposed on a fluidic air supply line connected to the cathodic inlet manifold (Ce_{c}) and
• has a valve head designed to take up a valve opening position and a valve closing position and designed to be opened or closed by pressure depending on whether the pressure exerted on its valve head is substantially equal to the upstream pressure Pᵢₙ or to the downstream pressure Pₒᵤₜ; and
• is pressure-controlled by said distributor (14) of said fluidic supply device (10) or by a control distributor (27) of the air supply valve (26), which has a first orifice (27.1) connected to said fluidic line (11) upstream of said regulator (12), a second orifice (27.2) connected to said fluidic line (11) downstream of said regulator (12), and a third orifice (27.3) known as the control orifice connected to the head of the air supply valve (26), and is designed to open or close the air supply valve (26) depending on whether its control orifice (27.3) is connected to its first orifice (27.1) or to its second orifice (27.2).
